# EUROPEAN PATENT SPECIFICATION

(11) **EP 4 006 189 B1**
(45) Date of publication and mention of the grant of the patent: **03.09.2025**
(21) Application number: 20844435.6
(22) Date of filing: 13.07.2020
(51) Int. Cl.: C22C 28/00, F25B 21/00, H01F 1/01, F25J 1/00, F25J 1/02

(54) **MAGNETIC REFRIGERATION MODULE, MAGNETIC REFRIGERATION SYSTEM, AND COOLING METHOD**
MAGNETISCHES KÜHLMODUL, MAGNETISCHES KÜHLSYSTEM, UND KÜHLVERFAHREN
MODULE DE RÉFRIGÉRATION MAGNÉTIQUE, SYSTÈME DE RÉFRIGÉRATION MAGNÉTIQUE, ET PROCÉDÉ DE RÉFRIGÉRATION

(30) Priority: 25.07.2019 JP 2019136731
(43) Date of publication of application: 01.06.2022
(73) Proprietor: National Institute for Materials Science, Tsukuba-shi, Ibaraki 305-0047 (JP)
(72) Inventor: MAMIYA Hiroaki, Tsukuba-shi, Ibaraki 305-0047 (JP); TERADA Noriki, Tsukuba-shi, Ibaraki 305-0047 (JP)
(74) Representative: V.O.
(86) International application number: PCT/JP2020/027239
(87) International publication number: WO 2021/015038

(56) References cited:
- EP-A1- 2 796 811
- JP-A- 2003 031 399
- JP-A- 2004 361 061
- JP-A- 2004 361 061
- JP-A- 2005 089 740
- US-A- 5 743 095
- US-A- 5 743 095

## Description

### [Technical Field]

The present invention relates to an active magnetic refrigeration module in which a phase transition is controlled by a magnetic field, a magnetic refrigeration system, and a cooling method.

Priority is claimed on Japanese Patent Application No. 2019-136731, filed on July 25, 2019, the content of which is incorporated herein by reference.

### [Background Art]

Magnetic refrigeration is a cooling technology that uses a magnetic material, that exhibits a magnetocaloric effect, as a refrigerant, and is a refrigerating technology by causing a ferromagnetic-paramagnetic phase transition using a cycle of increasing and decreasing a magnetic field, and using an endothermic reaction or an exothermic reaction generated here.

Moreover, a magnetic refrigeration system that uses a phenomenon that a substance generates or absorbs heat by adding or removing a magnetic field to a substance such as a magnetic material is attracting attention as an alternative to a heat cycle system of the related art that uses an exothermic or endothermic phenomenon using gas compression or expansion. A magnetic refrigeration system developed in the current technology expands a functional temperature range by combining a plurality of substances having compositions so as to exhibit a phenomenon in a temperature range suitable for each composition (see, for example, Patent Document 1). Furthermore, a magnetic field to be loaded is widely applied from zero to several T. As for the magnetic field in which an exothermic or endothermic phenomenon occurs, a portion where a magnetization phenomenon due to the magnetic field changes significantly is particularly effective, and a large width of a magnetic field applied reduces efficiency.

In the related art, in order to expand a working temperature of the system, a composition of a working substance is changed. For example, in Patent Document 1, La(Fe_{1-x-y}Co_{y}Siₓ)₁₃ is used as a magnetic refrigeration material, and the working temperature is expanded to a temperature range used for refrigerators and the like by changing x and y concentrations.

On the other hand, for applications such as liquefaction of hydrogen, Er₅Pd₂ is proposed as a magnetic refrigeration material in Patent Document 5 according to the proposal of the present applicant. However, in ferromagnets, an area in which a very large change in magnetic entropy can be obtained is limited to the vicinity of the Curie temperature. Therefore, since it is necessary to have a refrigerating capacity in a temperature range from about 40-50K, which reduces the efficiency of gas refrigerating, to a boiling point of liquid hydrogen of 20K, which is equal to or more than twice the temperature range, parallel use of a plurality of types of substances is also being considered.

Further, in the related art, a permanent magnet or a superconducting magnet is used as a unit for applying a magnetic field applied to a working substance. The permanent magnet is basically changed from a zero magnetic field to a maximum magnetic field by working substances in and out, rotation, or the like, and the superconducting magnet is changed by sweeping current. For example, in Patent Document 2 according to the proposal of the present applicant, the magnetic field is basically changed from zero (even if it is separated, it is not completely zero) → maximum magnetic field → zero, by disposing the permanent magnets above and below the working substance and performing rotation to cause the working substance to generate or absorb heat.

Patent document 6 (EP 2 796 811 A1) discloses a magnetocaloric heat pump device, comprising a magnetocaloric bed; a magnetic field source, the magnetocaloric bed and the magnetic field source being arranged to move relative to each other so as to generate a magnetocaloric refrigeration cycle within the heat pump, wherein the magnetic field source includes both a permanent magnet and an electromagnet.

Patent document 7 (JP 2004 361061 A) discloses a magnetic refrigerator comprising a static composition, and it is composed of the magnetic work body, a static heat insulating housing body housing the magnetic work body in a magnetic field in a heat insulating state, a magnetic field generating part for forming the magnetic field magnetizing and demagnetizing the magnetic work body, a heat dissipation take out part taking out magnetic entropy heat generated in the magnetic work body, and a cold take out part taking out cold generated by the magnetic work body demagnetized in an isothermal demagnetization process.

Non Patent Document 1 suggests a result of a study of a magnetocaloric effect on Gd₅Ge₄ under high hydrostatic pressure up to 9 kbar in a magnetic field up to 5 T.

### [Citation List]

### [Patent Documents]

[Patent Document 1]
   Japanese Unexamined Patent Application, First Publication No. 2009-221494
[Patent Document 2]
   PCT International Publication No. WO 2015/199139
[Patent Document 3]
   PCT International Publication No. WO 2018/129476
[Patent Document 4]
   Chinese Patent Application, Publication No. 107012408
[Patent Document 5]
   Japanese Unexamined Patent Application, First Publication No. 2017-39993 [Non Patent Document]
[Patent Document 6]
   European Patent Application EP 2 796 811 A1
[Patent Document 7]
   Japanese Patent Application JP 2004 361061 A

[Non Patent Document 1]
J. Appl. Phys. 105, 07A934 (2009)

### [Summary of Invention]

### [Technical Problem]

In the related art, there is a problem that a working substance having a plurality of compositions should be prepared in order to expand a working temperature. In addition, since application of a magnetic field is single, there is a problem that the maximum magnetic refrigeration capacity per unit driving force (change in a magnetic field) of a substance cannot be exhibited.

Further, in the related art, even in a case of using normal conducting, superconducting, or a permanent magnet as a method of applying a magnetic field, a structure is not a hybrid structure, therefore, there are problems that a variable magnetic field cannot be superimposed on a fixed magnetic field which is a base magnetic field, and it is difficult to realize a high magnetic field.

An object of the present invention is to provide a magnetic refrigeration module and a magnetic refrigeration system which can draw out a maximum magnetic refrigeration capacity per unit driving force (change in magnetic field) of a substance.

### [Solution to Problem]

The invention is set out in the appended set of claims.
[1] A magnetic refrigeration module according to a first aspect of the present invention includes a magnetic refrigeration operation unit which has a magnetic refrigeration material, and extends in a longitudinal direction, and a fixed magnetic field excitation unit and a variable magnetic field excitation unit which are disposed apart from each other in an outer peripheral direction of the magnetic refrigeration operation unit, in which the fixed magnetic field excitation unit applies a fixed magnetic field to the magnetic refrigeration operation unit, and the variable magnetic field excitation unit applies a variable magnetic field to the magnetic refrigeration operation unit when being in an ON state and does not apply the variable magnetic field to the magnetic refrigeration operation unit when being in an OFF state. The fixed magnetic field excitation unit and the variable magnetic field excitation unit are disposed concentrically. The fixed magnetic field excitation unit is disposed in an outer peripheral direction of the variable magnetic field excitation unit. The fixed magnetic field excitation unit is in a tubular shape. The fixed magnetic field is a magnetic field having a predetermined magnetic field strength, and the magnetic field strength does not vary with a passage of time. At least one of a superconducting magnet and a resistive magnet is used as the variable magnetic field excitation unit.
[2] In the magnetic refrigeration module according to the first aspect, it is preferable that the magnetic refrigeration operation unit is rod-shaped, flat plate-shaped, cylindrical, or tubular.
[3] In the magnetic refrigeration module according to the first aspect, it is preferable that the magnetic refrigeration material is H₀ (holmium), Gd₅(Ge₁₋ₓSiₓ)₄ (x = 0 to 1), Co (SₓSe₁₋ₓ)₂ (x = 0.8 to 1.0), (Sm₁₋ₓGdₓ)_{0.55}Sr_{0.45}MnO₃ (x = 0 to 1), Eu_{0.55}Sr_{0.45}MnO₃, rare earth simple substances Tb (terbium), Dy (dysprosium), and Er (erbium), or an alloy obtained by a combination thereof.
[4] In the magnetic refrigeration module according to the first aspect, it is preferable that when a magnetic field strength of the fixed magnetic field is 1.5 T or less, the fixed magnetic field excitation unit is a permanent magnet, and when the magnetic field strength of the fixed magnetic field is 1.5 T or more, the fixed magnetic field excitation unit is a superconducting magnet.
[5] A magnetic refrigeration system according to a second aspect of the present invention includes at least one magnetic refrigeration module according to the first aspect, in which a magnetic field strength to be applied to the magnetic refrigeration operation unit by the fixed magnetic field excitation unit is distributed so as to become higher continuously or stepwise in the longitudinal direction.
[6] The magnetic refrigeration system according to the second aspect may include a plurality of magnetic refrigeration modules according to the above aspect.
[7] In the magnetic refrigeration system according to the second aspect, a magnetic field strength of a variable magnetic field to be applied to the magnetic refrigeration operation unit by the variable magnetic field excitation unit may be distributed so as to become higher continuously or stepwise in the longitudinal direction.
[8] In the magnetic refrigeration system according to the second aspect, a magnetic field strength of a variable magnetic field to be applied to the magnetic refrigeration operation unit by the variable magnetic field application unit may be constant in the longitudinal direction.
[9] A magnetic refrigeration system according to a third aspect of the present invention includes: only one magnetic refrigeration module according to the first aspect, in which the magnetic field strength to be applied to the magnetic refrigeration operation unit by the fixed magnetic field excitation unit is distributed so as to become higher continuously in the longitudinal direction, and a magnetic field strength of a variable magnetic field to be applied to the magnetic refrigeration operation unit by the variable magnetic field excitation unit is distributed so as to become higher continuously in the longitudinal direction.
[10] The magnetic refrigeration system according to the third aspect, in which a sum of the magnetic field strength of the fixed magnetic field and the magnetic field strength of the variable magnetic field is equal to or more than a magnetic field strength corresponding to a steep slope area when being in the ON state, and is equal to or less than a magnetic field strength corresponding to the steep slope area when being in the OFF state, and the steep slope area is an area in which magnetization changes with a steep slope in response to a change in the magnetic field applied to the magnetic refrigeration operation unit.
[11] In the magnetic refrigeration system according to the third aspect, a high temperature end is set to a first temperature, and a low temperature end is set to a second temperature, when a magnetic field strength to be applied to the high temperature end is higher than a magnetic field strength corresponding to the steep slope area in the first temperature, when being in the ON state, a magnetic field strength to be applied to the high temperature end is lower than a magnetic field strength corresponding to the steep slope area in the first temperature, when being in the OFF state, a magnetic field strength to be applied to the low temperature end is higher than a magnetic field strength corresponding to the steep slope area in the second temperature, when being in the ON state, and a magnetic field strength to be applied to the low temperature end is lower than a magnetic field strength corresponding to the steep slope area in the second temperature, when being in the OFF state.
[12] In the magnetic refrigeration system according to the third aspect, a temperature at the low temperature end may be 10 K or higher and a temperature at the high temperature end may be 150 K or lower.
[13] A cooling method according to a fourth aspect of the present invention, using the magnetic refrigeration module according to the first aspect or the magnetic refrigeration system according to the second or third aspect, includes an excitation step of increasing a variable magnetic field and increasing a temperature of the magnetic refrigeration operation unit; a heat removal step of flowing a gas to be cooled from the low temperature end to the high temperature end in the ON state; an adiabatic demagnetization step of demagnetizing the variable magnetic field and lowering the temperature of the magnetic refrigeration operation unit; and a cooling step of flowing the gas to be cooled from the high temperature end to the low temperature end, in which a hydrogen gas is used inside the magnetic refrigeration operation unit as the gas to be cooled.

### [Advantageous Effects of Invention]

According to a magnetic refrigeration module of the present invention and a magnetic refrigeration system using the same, the following effects are obtained.
(i) According to the magnetic refrigeration system of the present invention, a magnetic refrigeration system with high efficiency can be realized by using a magnetic refrigeration material whose Magnetization (M)-Magnetic field (H) characteristics (hereinafter, may be referred to as M-H characteristics) shifts depending on a temperature, and utilizing a steep slope area in which the M-H characteristics change significantly.
(ii) In the related art, a plurality of working substances having compositions adjusted to working temperatures were required, but in the present invention, even one type of working substance with a single composition, an operation can be performed.
(iii) In the present invention, by adopting a magnetic field application method in which a variable magnetic field is superimposed on a fixed magnetic field (base magnetic field), a steep slope area in which the M-H characteristics change significantly can be utilized and efficiency can be improved.

### [Brief Description of Drawings]

Fig. 1A is a diagram showing an area in which a magnetization changes with a steep slope in response to a change in a magnetic field, in a magnetization (M)-magnetic field (H) curve, of a magnetic refrigeration material used in the present invention.
Fig. 1B is a diagram showing a magnetization (M) magnetic field-(H) curve of a holmium simple substance showing an example of the present invention.
Fig. 2 is a diagram showing the amount of change in magnetic entropy (-ΔS) when a magnetic field h of 0.1 T is further applied to a holmium simple substance with a base magnetic field H₀.
Fig. 3 is a diagram showing a temperature change in a cycle in which a magnetic field of 1.5 T is applied to a holmium simple substance with no magnetic field and removed therefrom, and a cycle in which a magnetic field h of 0.4 T is further applied to the holmium simple substance with a base magnetic field H₀ = 0.5 T and then removed therefrom, and is a schematic diagram showing a change in entropy in the cycles.
Fig. 4 is an explanatory diagram showing a thermal cycle of a magnetic refrigeration system showing an example of the present invention, and shows a thermal cycle using a variable magnetic field ΔH from a base magnetic field H₀.
Fig. 5 shows Example 2 of the present invention, and is a diagram showing a temperature change when a magnetic field h of 0.4 T is further applied to a holmium simple substance with a base magnetic field H₀ at various temperatures T and the h is removed therefrom.
Fig. 6 is a diagram showing a temperature change width when a magnetic field h of 0.4 T is further applied to a holmium simple substance with a base magnetic field H₀ at various temperatures T and the h is removed therefrom.
Fig. 7A is a schematic view showing a section of an embodiment of a magnetic refrigeration system. The embodiment shown in Fig. 7A does not correspond to the claimed invention.
Fig. 7B is a cross-sectional view taken along the line VIIB-VIIB of Fig. 7A.
Fig. 8A is a schematic view showing a section of a magnetic refrigeration system according to Modification Example 1. Modification Example 1 does not correspond to the claimed invention.
Fig. 8B is a schematic view showing a section of a magnetic refrigeration system according to Modification Example 2. Modification Example 2 does not correspond to the claimed invention.
Fig. 8C is a schematic view showing a section of a magnetic refrigeration system according to Modification Example 3. Modification Example 3 does not correspond to the claimed invention.
Fig. 9A is a schematic view showing a section of a magnetic refrigeration system according to Modification Example 4.
Fig. 9B is a cross-sectional view taken along the line IXB-IXB of Fig. 9A.
Fig. 10 is an explanatory view showing operation steps of the magnetic refrigeration system shown in Fig. 7A.
Fig. 11 is a schematic view showing a section of a magnetic refrigeration system according to Modification Example A. Modification Example A does not correspond to the claimed invention.
Fig. 12 is a diagram showing a magnetization (M)-magnetic field (H) curve (from 16K to 100K in 3K increments) of Gd₅Ge₄ of Modification Example A.
Fig. 13 is a diagram showing the magnetization (M)-magnetic field (H) characteristics of Co(SₓSe₁₋ₓ)₂ of Modification Example B.
Fig. 14 is a diagram showing a magnetization (M)-magnetic field (H) curve of (Gd_{0.5}Sm_{0.5})_{0.55}Sr_{0.45}MnO₃ of Modification Example B.
Fig. 15 is a schematic diagram showing a magnetocaloric effect, and shows a magnetic field application state and a zero magnetic field state.

### [Description of Embodiments]

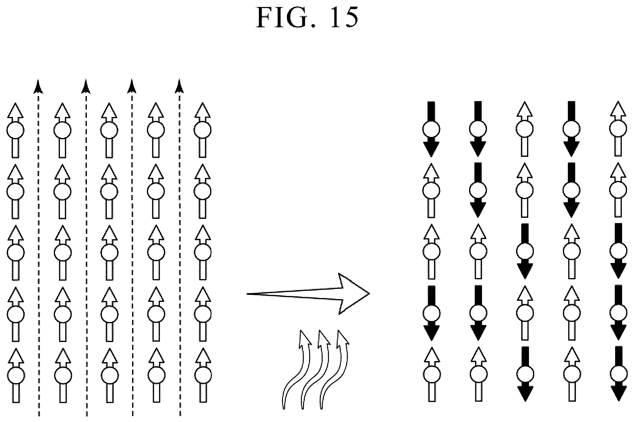

The technical terms used in the present specification will be described.
(1) Magnetocaloric effect: A temperature change is induced by changing a magnetic field applied to a magnetic material. When the magnetic field applied to the magnetic material is cut off as shown in Fig. 15, magnetic entropy increases and heat absorption occurs. The amount of heat to be absorbed in this case is given by the product of a change in magnetic entropy and an absolute temperature. Therefore, if a larger change in magnetic entropy is obtained, a larger amount of heat is absorbed. A step of cutting off the magnetic field applied to the magnetic material corresponds to a step of gas expansion in gas refrigerating.
(2) Ferromagnet: A magnetic material showing a magnetic structure in which adjacent electron spins are oriented in the same direction. Magnetization occurs under a zero magnetic field and the ferromagnet has a property of attracting a magnet. Also, a temperature at which a ferromagnetic magnetic structure appears is called a Curie temperature.
(3) Antiferromagnet: A magnetic material showing a magnetic structure in which adjacent electron spins are oriented in opposite directions. Under a zero magnetic field, no magnetization occurs and the antiferromagnet does not have a property of attracting a magnet. Also, a temperature at which an antiferromagnetic magnetic structure appears is called a Neel temperature.
(4) Non-ferromagnetic magnetic structure: A magnetic structure in which electron spins are not aligned in the same direction as a ferromagnetic magnetic structure. For example, the antiferromagnetic magnetic structure, a spiral magnetic structure, and a magnetic structure or the like of a composite magnetic material correspond thereto.
(5) Magnetic entropy: Extensive state quantity that represents a disorder of a spin state. In a ferromagnetic structure or an antiferromagnetic structure that appears at a low temperature, the magnetic entropy becomes small because adjacent electron spins are aligned in the same direction or in opposite directions. On the other hand, in a paramagnetic structure (magnetic structure as shown on the right in Fig. 15) in which electron spins appearing at a high temperature are oriented in random directions, a large magnetic entropy is observed.

Hereinafter, the present invention will be described with reference to the drawings and examples.

### [Example]

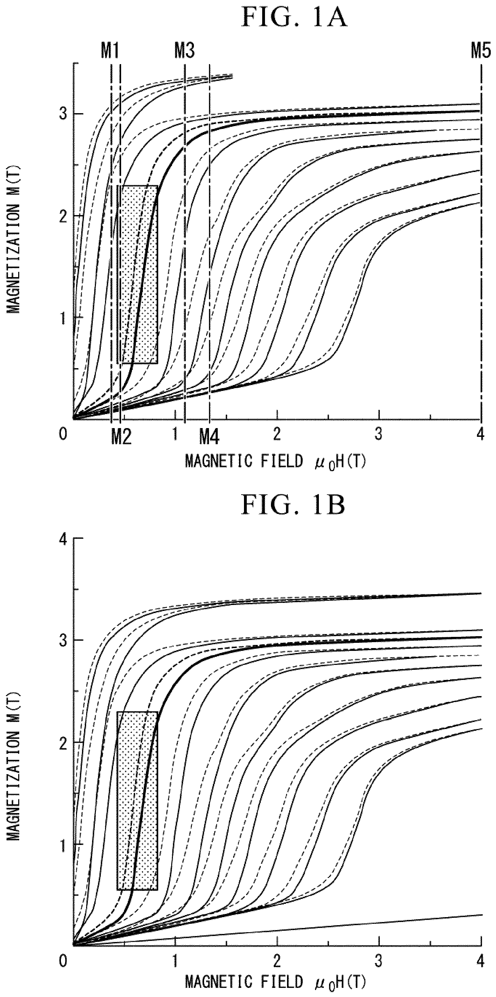

Fig. 1A is a diagram showing an area in which a magnetization changes with a steep slope with respect to a change in a magnetic field, in a magnetization (M)-magnetic field (H) curve, of a magnetic refrigeration material used in the present invention. In Fig. 1A, the magnetization (M)-magnetic field (H) curves at 2 K, 10 K, 20 K, 30 K, 40 K, 50 K, 60 K, 70 K, 80 K, 90 K, and 100 K are shown in order from a curve with a low magnetic field, and the solid lines indicate changes when an external magnetic field is applied, and dotted lines indicate changes when the external magnetic field is reduced.

Here, the area is divided into five areas: a low-level side gentle slope area; a low-level side connection area; a steep slope area; a high-level side connection area; and a high-level side gentle slope area, in order from a state of low magnetization. The low-level side gentle slope area is an area in which the magnetization changes with a gentle slope in response to a change in the magnetic field, and is a spiral magnetic state in which magnetic ion spins of the magnetic refrigeration material are arranged periodically so as to draw a spiral. Focusing on the 40 K graph in Fig. 1A, the low-level side gentle slope area corresponds to an area from the origin O to a boundary point M1. The high-level side gentle slope area is an area in which the magnetization changes or saturates with a gentle slope in response to a change in the magnetic field. The high-level side gentle slope area corresponds to a magnetic saturation state in which the magnetic ion spins of the magnetic refrigeration material are aligned in a magnetic field direction. The high-level side gentle slope area corresponds to an area of the boundary points M4 to M5 in Fig. 1A.

The steep slope area is an area in which the magnetization changes with a steep slope in response to a change in the magnetic field. The steep slope area corresponds to an area from the boundary points M2 to M3 in Fig. 1A. The steep slope area has a higher level of magnetization than the low-level side gentle slope area. Furthermore, the steep slope area has a lower level of magnetization than the high-level side gentle slope area. As shown in Fig. 1A, a steep slope area of magnetization in response to the change in the magnetic field has temperature dependence. The steep slope area is, for example, an area in which a rate of change of the magnetization M (T) per unit change of a magnetic field µ₀H (T) exceeds 1.

**In** a case where the magnetization (M)-magnetic field (H) curves of the low-level side gentle slope area, the steep slope area, and the high-level side gentle slope area are approximated by a straight line, a deviation from an actual magnetization (M)-magnetic field (H) curve occurs in the vicinity of an intersection of these linear approximations. Therefore, the curve is approximated between the low-level side connection area and the high-level side connection area to reduce the deviation.

That is, the low-level side connection area is an area in which the low-level side gentle slope area and the steep slope area are connected in the magnetization (M)-magnetic field (H) curve. That is, the low-level side connection area corresponds to an area of the boundary points M1 to M2 in Fig. 1A. The high-level side connection area is an area in which the steep slope area and the low-level side gentle slope area are connected in the magnetization (M)-magnetic field (H) curve. The high-level side connection area corresponds to an area of the boundary points M3 to M4 in Fig. 1A.

Here, focusing on the 40 K graph, the five areas of the low-level side gentle slope area, the low-level side connection area, the steep slope area, the high-level side connection area, and the high-level side gentle slope area and boundary points thereof have been described, and the five areas and boundary points exist at any temperature. As the temperature increases, a magnitude of the magnetic field corresponding to the boundary point tends to increase.

As such a magnetic refrigeration material, holmium, Gd₅(Ge₁₋ₓSiₓ)₄ (x = 0 to 1), Co(SₓSe₁₋ₓ)₂ (x = 0.8 to 1.0), (Sm₁₋ₓGdₓ)_{0.55}Sr_{0.45}MnO₃ (x = 0 to 1), Eu_{0.55}Sr_{0.45}MnO₃, rare earth simple substances Tb, Dy, and Er, or an alloy obtained by a combination thereof is used.

### <Example 1>

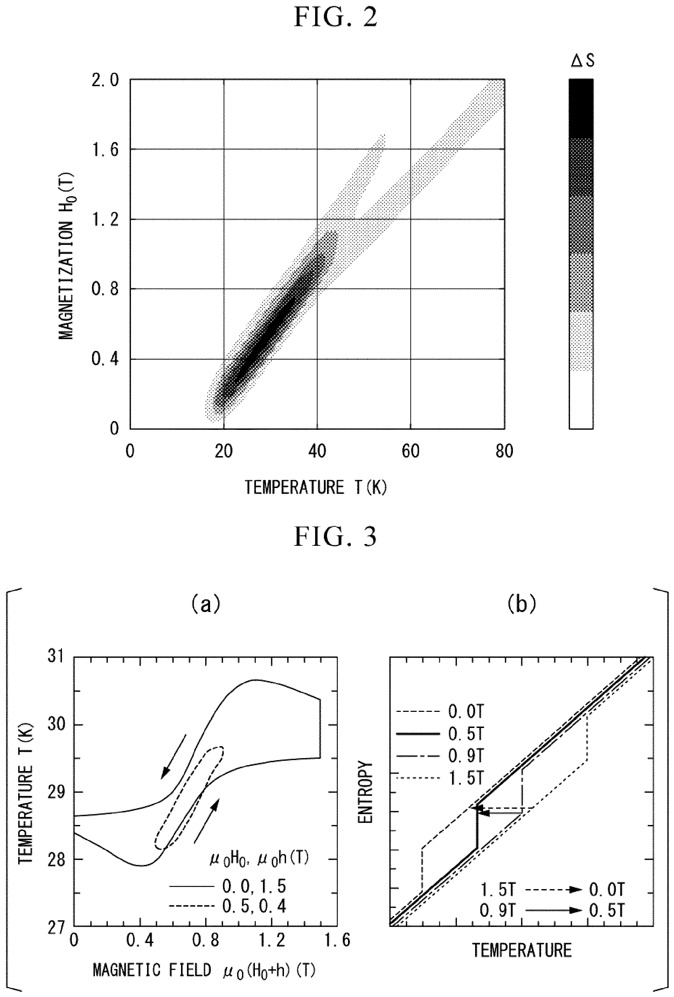

Fig. 1B is a diagram showing a magnetization (M)-magnetic field (H) curve of holmium simple substance. In Fig. 1B, the magnetization (M)-magnetic field (H) curves at 2 K, 10 K, 20 K, 30 K, 40 K, 50 K, 60 K, 70 K, 80 K, 90 K, 100 K, and 200 K are shown in order from a curve with a low magnetic field, and the solid lines indicate changes when an external magnetic field is applied, and dotted lines indicate changes when the external magnetic field is reduced. The M-H characteristics change depending on the temperature, and rapid magnetization change behavior appears. The magnetization increases rapidly over a certain limited magnetic field range. That is, the spin arrangement state changes significantly only in the range. Therefore, the amount of change in magnetic entropy (-ΔS) when a magnetic field h of 0.1 T is further applied to a magnetic field H₀ with a predetermined magnitude is determined from a magnetization-temperature curve using Maxwell relations (see Fig. 2). In the drawing, the magnitude of ΔS is indicated by shading, and it is shown that as the area is darker, the value is larger. In the drawing, the maximum value of ΔS was 3.0 (Jkg⁻¹K⁻¹).

Table 1 shows the amount of change in magnetic entropy (-ΔS) determined using Maxwell relations and the conditions used in Maxwell relations. For example, under Condition 1, when the magnetic field to be applied to holmium simple substance to which a magnetic field H₀ = 0.2 T has been applied is strengthened by 0.1 T, at a temperature of T_{M} = 20 K, it is shown that the amount of a change in magnetic entropy (-ΔS) changes by 2.4 J·kg⁻¹·K⁻¹. Under Condition 1, the amount of change in the magnetic field per unit driving force {-ΔS/Δ (µ₀h)} was 24 (J·kg⁻¹·K⁻¹·T⁻¹).

In the related art, the amount of change in magnetic entropy per unit magnetic field {-ΔS/Δ (µ₀h)} was about 6 K. As shown in Table 1, the amount of change in magnetic entropy per unit magnetic field {-ΔS/Δ (µ₀h)} in response to varying of the magnetic field is about 5 times the maximum value of the related art at around 30 K. It is considered that this is because the effect of applying a variable magnetic field to a base magnetic field only in a portion where the change in the M-H characteristics is large is obtained.

**[Table 1]**

| | Substance | Temperature T_{M} (K) | Magnetic field H₀ (T) | Amount of change in magnetic entropy -ΔS (J·kg⁻¹·K⁻¹) | Amount of change in magnetic entropy per unit driving force - ΔS/Δ (µ₀h) (J·kg⁻¹·K⁻¹·T⁻¹) |
|---|---|---|---|---|---|
| Condition 1 | Holmium | 20 | 0.2 | 2.4 | 24 |
| Condition 2 | Holmium | 26 | 0.4 | 3.1 | 31 |
| Condition 3 | Holmium | 31 | 0.6 | 3.1 | 31 |
| Condition 4 | Holmium | 36 | 0.8 | 2.5 | 25 |
| Condition 5 | Holmium | 41 | 1 | 1.8 | 18 |

A temperature sensor was attached to a holmium simple substance, and a temperature change of a cycle in which a magnetic field of 1.5 T was applied to no magnetic field, and then removed therefrom and a temperature change of a cycle in which a magnetic field h of 0.4 T was further applied to a base magnetic field H₀ = 0.5 T and then removed therefrom were measured. Fig. 3(a) shows a correlation diagram between the magnitude of the magnetic field applied to holmium simple substance and the temperature change. In Fig. 3(a), the correlation diagram shown by the solid line is a correlation diagram of a cycle in which a magnetic field of 1.5 T was applied to no magnetic field and subsequently removed therefrom (hereinafter, referred to as a first cycle; 0 T → 1.5 T → 0 T). In Fig. 3(a), the correlation diagram shown by the dotted line is a correlation diagram of a cycle in which a magnetic field h of 0.4 T was further applied to a base magnetic field H₀ = 0.5 T and then removed therefrom (hereinafter, referred to as a second cycle; 0.4 T → 1.5 T → 0.4 T). In the case of the first cycle, holmium simple substance increased by about 1.6 K from about 27.9 K to 29.5 K when the magnetic field of 1.5 T was applied, and returned to almost an original temperature when returned to a state of no magnetic field. On the other hand, in the case of the second cycle, the holmium simple substance increased by about 1.5 K from 28.2 K to 29.7 K when the magnetic field h of 0.4 T is further applied to the base magnetic field of 0.5 T, whereas the holmium simple substance decreased and cooled to 28.2 K when demagnetized to 0.5 T. In this manner, it was confirmed that even if the magnetic field variation range was narrowed down to an efficient range using the base magnetic field, the magnetic refrigeration effect was almost the same as when the magnetic field was changed significantly. Fig. 3(b) is an explanatory diagram of a thermal cycle showing a relationship between a temperature and magnetic entropy, obtained from Fig. 3(a). The dotted arrow in Fig. 3(b) indicates a change when the magnetic field applied to the holmium simple substance was lowered to 0 T from 1.5 T and adiabatic demagnetization was performed, and a change when the magnetic field applied to the holmium simple substance was lowered to 0.5 T from 0.9 T and the adiabatic demagnetization was performed.

As shown in Fig. 3(b), comparing the first cycle and the second cycle, it was found that a change width of the magnetic field in the first cycle is larger than that in the second cycle, but the amount of temperature change was small relative to the change width of the magnetic field and an efficiency is low.

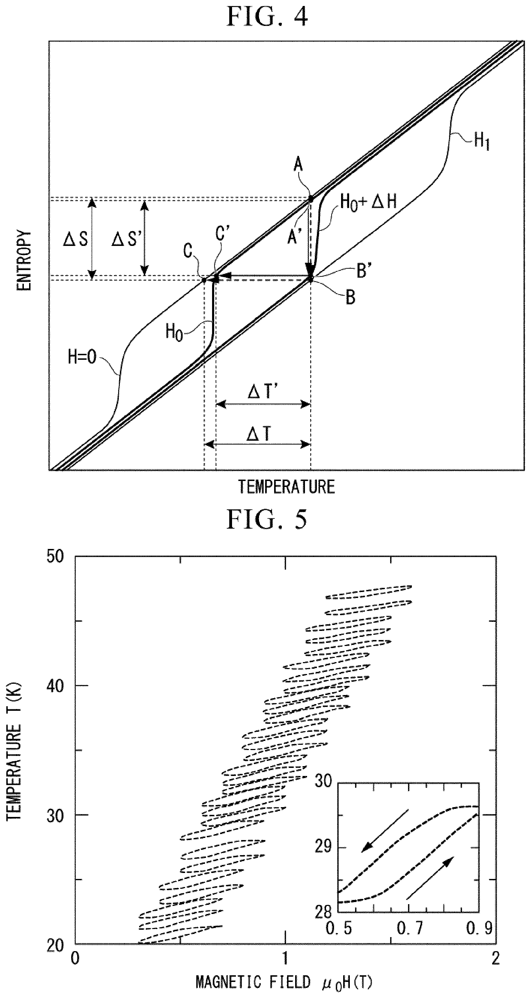

Fig. 4 is an explanatory diagram showing a thermal cycle of a magnetic refrigeration system showing an example of the present invention, and shows a thermal cycle using a variable magnetic field ΔH from a base magnetic field H₀. Fig. 4 shows a comparison between a magnetic refrigeration cycle in a case of using a magnetic field of high magnetic field H1 from a zero magnetic field (isothermal excitation step (A → B) and adiabatic demagnetization (B → C)) and a magnetic refrigeration cycle using a variable magnetic field ΔH from the base magnetic field H₀ (isothermal excitation step (A' → B') and adiabatic demagnetization step (B' → C')).

A change in entropy ΔS' and a temperature change ΔT' in a thermal cycle of the magnetic refrigeration using the variable magnetic field ΔH from the base magnetic field H₀ (isothermal excitation step (A' → B') and adiabatic demagnetization step (B' → C')) have almost the same effect of the change in entropy ΔS and the temperature change ΔT in a case of using the magnetic field to a high magnetic field H1 from the zero magnetic field as the magnetic refrigeration thermal cycle (A → B and B → C).

### <Example 2>

Fig. 5 shows Example 2 of the present invention, and is a diagram showing a temperature change when the magnetic field h of 0.4 T is further applied to a holmium simple substance with the base magnetic field H₀ at various temperatures T about from 20 K to 50 K and the h is removed therefrom.

A magnet that generates a base magnetic field at intervals of 0.033 T from 0.0 T to 1.5 T as a base magnetic field and at the same time generates a variable magnetic field of 0.4 T is set on an outer periphery portion of a simple substance holmium, and a magnetic field to be applied at each base magnetic field was changed.

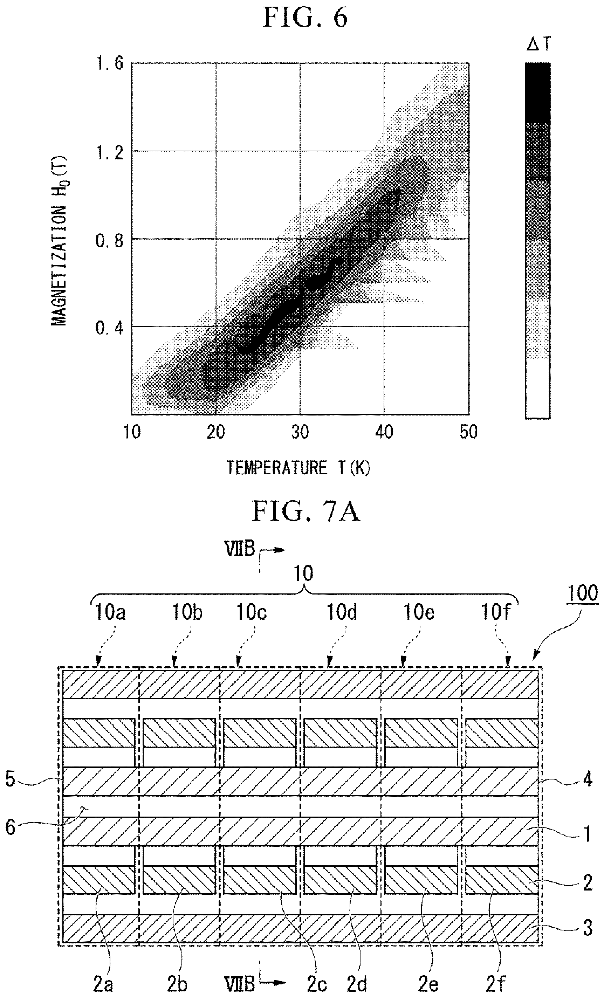

Fig. 6 is a diagram showing a temperature change width when a magnetic field h of 0.4 T is further applied to a holmium simple substance with a base magnetic field H₀ at various temperatures T about from 10 K to 50 K and the h is removed therefrom. In the drawing, the magnitude of the temperature change ΔT (K) is indicated by shading, and it is shown that as the area is darker, the value is larger. In the drawing, the maximum value of ΔT was 1,6 (K).

When using the base magnetic field as an appropriate fixed magnetic field, holmium, which also serves as a heat storage body, could be cooled by 1.2 to 1.5K from any temperature in the range of 20 to 40K.

### <Magnetic refrigeration system>

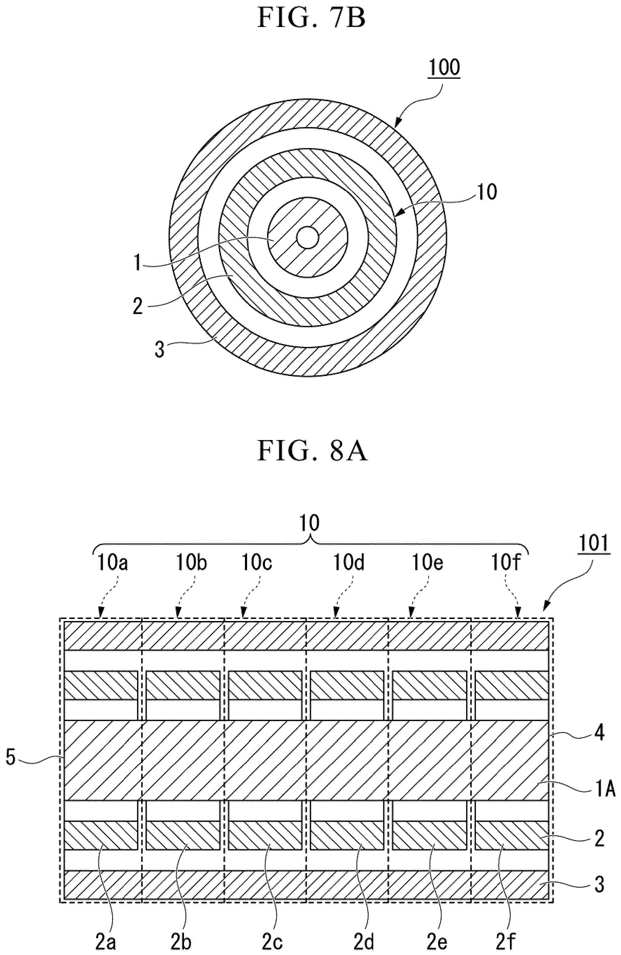

Fig. 7A is schematic view showing a section of a magnetic refrigeration system 100. The embodiment of the magnetic refrigeration system 100, shown in Fig. 7A, does not correspond to the claimed invention. Fig. 7B shows a cross-sectional view taken along the line VIIB-VIIB of Fig. 7A (VIIB-VIIB line cross-sectional view).

The magnetic refrigeration system 100 has at least one magnetic refrigeration module 10. The magnetic refrigeration system 100 shown in Fig. 7A is an example of a case in which a plurality of magnetic refrigeration modules 10 are provided, and includes six magnetic refrigeration modules 10a to 10f. The magnetic refrigeration module 10 includes a magnetic refrigeration operation unit 1, a fixed magnetic field excitation unit 2 located on the outer peripheral direction of the magnetic refrigeration operation unit 1, and a variable magnetic field excitation unit 3.

The magnetic refrigeration operation unit 1 has a magnetic refrigeration material. The magnetic refrigeration operation unit 1 is, for example, a cylindrical or tubular member. For the magnetic refrigeration operation unit 1, for example, a particulate, pellet-like, porous, or dense solid material is used. End portions in a longitudinal direction in which the magnetic refrigeration operation unit 1 extends are referred to as a first end 4 and a second end 5. Hereinafter, the longitudinal direction of the magnetic refrigeration operation unit 1 may be referred to as a first direction. When the magnetic refrigeration system 100 is used, one of the first end 4 and the second end 5 acts as a high temperature end and the other acts as a low temperature end.

In a case where the magnetic refrigeration operation unit 1 has a tubular or cylindrical shape, a refrigerant flow path 6 is formed inside the magnetic refrigeration operation unit 1. According to the principle to be described in detail later, a gas to be cooled moves through the refrigerant flow path 6 formed inside the magnetic refrigeration operation unit 1, and the magnetic refrigeration system 100 acts. In a case where the magnetic refrigeration operation unit 1 is in the form of particles, pellets, or a porous having low fluid resistance, the gas to be cooled also flows inside the magnetic refrigeration operation unit 1.

As the magnetic refrigeration material to be used in each magnetic refrigeration module 10, materials having different composition parts may be appropriately combined and used depending on a desired temperature.

The fixed magnetic field excitation unit 2 includes a plurality of fixed magnetic field excitation units 2a to 2f. Each of the fixed magnetic field excitation units 2a to 2f is provided in each of the magnetic refrigeration modules 10a to 10f. As the fixed magnetic field excitation unit 2, for example, a permanent magnet or a superconducting magnet is used. In a case where the magnitude of the fixed magnetic field is 1.5 T or less, it is preferable that a permanent magnet is used as the fixed magnetic field excitation unit 2. In a case where the magnitude of the fixed magnetic field is 1.5 T or more, it is preferable that the superconducting magnet is used as the fixed magnetic field excitation unit 2.

The fixed magnetic field excitation unit 2 applies a fixed magnetic field to the magnetic refrigeration operation unit 1. The fixed magnetic field is a magnetic field having a predetermined magnetic field strength, and the magnetic field strength does not vary with a passage of time. It is preferable that the magnetic field strength of the fixed magnetic field becomes higher stepwise along the first direction. For example, it is preferable that the magnetic field strength of the fixed magnetic field excitation unit 2a is the smallest among the fixed magnetic field excitation units 2a to 2f, and the magnetic field strength of the fixed magnetic field excitation unit 2f is the largest among the fixed magnetic field excitation units 2a to 2f.

As the variable magnetic field excitation unit 3, at least one selected from a resistive magnet and a superconducting magnet is used. The operation of the variable magnetic field excitation unit 3 will be described in detail later, but in an excitation step and a heat removal step, a variable magnetic field is applied to the magnetic refrigeration operation unit 1. In the present embodiment, a state in which the variable magnetic field excitation unit 3 applies the variable magnetic field to the magnetic refrigeration operation unit 1 may be referred to as an ON state, and a state of non-application may be referred to as an OFF state.

In each magnetic refrigeration module 10 of the magnetic refrigeration system 100 according to the present embodiment, the magnetic field strength of the fixed magnetic field and the magnetic field strength of the variable magnetic field are set based on the working temperature of the magnetic refrigeration operation unit 1 and the steep slope area. The strength of the fixed magnetic field is lower than the strength of the magnetic field corresponding to the steep slope area of the magnetic refrigeration material. Further, when a variable magnetic field is applied, the sum of the strengths of the fixed magnetic field and the variable magnetic field is higher than the strength of the magnetic field corresponding to the steep slope area of the magnetic refrigeration material. That is, the sum of the magnetic field strengths of the fixed magnetic field and the variable magnetic field is equal to or less than the magnetic field corresponding to the steep slope area when being in the OFF state, and equal to or more than the magnetic field corresponding to the steep slope area when being in the ON state. When the sum of the magnetic field strengths of the fixed magnetic field and the variable magnetic field is equal to or less than the magnetic field corresponding to the steep slope area, the magnetic field strength of the variable magnetic field in the OFF state may be a value larger than 0.

In the magnetic refrigeration system 100, it is preferable that the temperatures at both ends are set to a predetermined temperature. For example, the temperature of the high temperature end 4 is set to be a first temperature, and the temperature of the low temperature end 5 is set to be a second temperature. In this case, it is preferable that each of the magnetic field strengths applied to the high temperature end 4 and the low temperature end 5 when being in the ON state is higher than the magnetic field strength corresponding to the steep slope area at the first temperature and the magnetic field strength corresponding to the steep slope area at the second temperature. In addition, it is preferable that each of the magnetic field strengths applied to the high temperature end 4 and the low temperature end 5 when being in the OFF state is lower than the magnetic field strength corresponding to the steep slope area at the first temperature and the magnetic field strength corresponding to the steep slope area at the second temperature. The first temperature is, for example, 150 K, and the second temperature is, for example, 10 K.

### (Modification Example 1)

Fig. 8A is a cross-sectional view of a magnetic refrigeration system 101 according to Modification Example 1. The embodiment of the magnetic refrigeration system 101 according to Modification Example 1, as shown in Fig. 8A, does not correspond to the claimed invention. The magnetic refrigeration system 101 is different from the magnetic refrigeration system 100 shown in Fig. 7A in that a magnetic refrigeration operation unit 1A is provided. The magnetic refrigeration operation unit 1A does not have a through hole penetrating in the first direction. The magnetic refrigeration operation unit 1A is in the form of particles or pellets. Therefore, it is possible to cool the gas to be cooled by flowing the gas inside the magnetic refrigeration operation unit 1A. In this case, it may be considered that the refrigerant flow path is formed inside the magnetic refrigeration operation unit 1A. Other configurations are the same as those of the magnetic refrigeration system 100 shown in Fig. 7A, and the description thereof will not be repeated.

### (Modification Example 2)

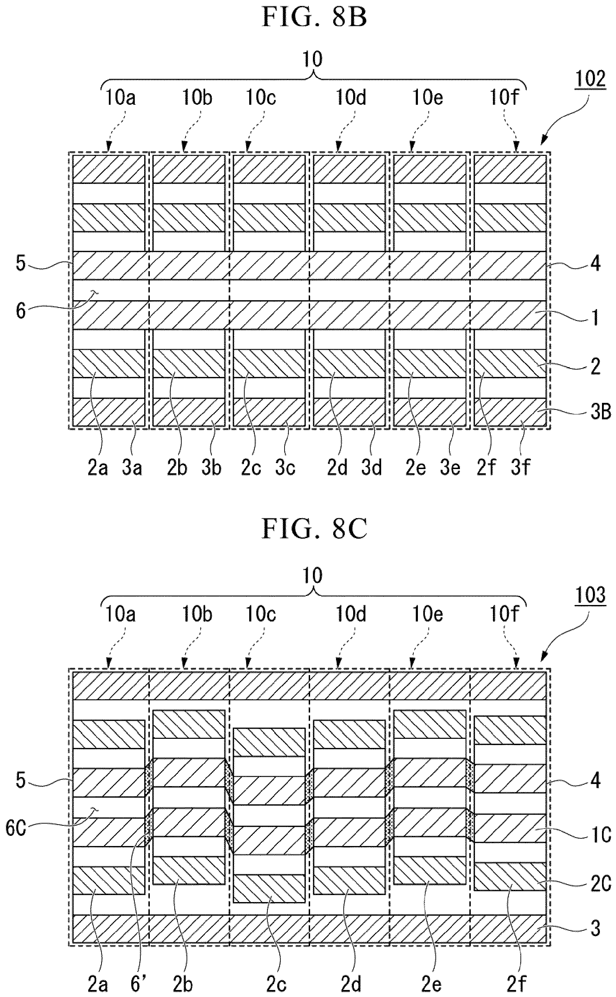

Fig. 8B is a cross-sectional view of a magnetic refrigeration system 102 according to Modification Example 2. The embodiment of the magnetic refrigeration system 102 according to the Modification Example 2, as shown in Fig. 8B, does not correspond to the claimed invention. The magnetic refrigeration system 102 is different from the magnetic refrigeration system 100 shown in Fig. 7A in that the variable magnetic field excitation unit 3B includes a plurality of independent variable magnetic field excitation units 3B to 3f. The variable magnetic field excitation unit 3B is distributed so that the magnetic field strength of the variable magnetic field becomes higher stepwise along the first direction when a magnetic field is applied to the magnetic refrigeration operation unit 1. In this case, the magnetic field strength of the variable magnetic field in the magnetic refrigeration module 10a is the smallest among the variable magnetic fields in the magnetic refrigeration modules 10a to 10f, and the magnetic field strength of the variable magnetic field in the magnetic refrigeration module 10f is the largest among the magnetic refrigeration modules 10a to 10f.

### (Modification Example 3)

Fig. 8C is a cross-sectional view of a magnetic refrigeration system 103 according to Modification Example 3. The embodiment of the magnetic refrigeration system 103 according to Modification example 3, as shown in Fig. 8C, does not form part of the invention as claimed. The magnetic refrigeration system 103 is different from the magnetic refrigeration system 100 in that a connection pipe 6' is provided. The magnetic refrigeration operation unit 1C and the fixed magnetic field excitation unit 2C of the magnetic refrigeration system 103 are not arranged concentrically. The magnetic refrigeration operation units in the adjacent magnetic refrigeration modules are connected by the connection pipe 6'. A predetermined shape is selected for the connection pipe 6'. Fig. 8C shows an example in which central positions of the magnetic refrigeration operation unit 1C and the fixed magnetic field excitation unit 2 in each magnetic refrigeration module 10 shift, but a configuration or the like in which thicknesses of the fixed magnetic field excitation unit 2 and the magnetic refrigeration operation unit 1 are different for each magnetic refrigeration module may be adopted. Further, the thickness or a position of the variable magnetic field excitation unit 3 may be appropriately adjusted according to the configurations of the magnetic refrigeration operation unit 1 and the fixed magnetic field excitation unit 2.

### (Modification Example 4)

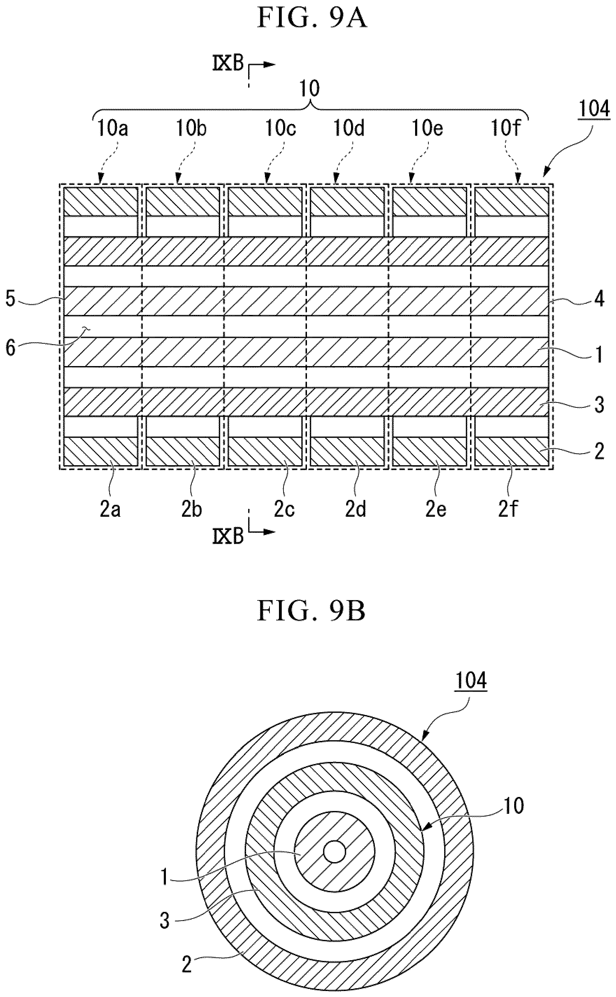

Fig. 9A is a cross-sectional view of a magnetic refrigeration system 104 according to Modification Example 4. The magnetic refrigeration system 104 is different from the magnetic refrigeration system 100 shown in Fig. 7A in that the fixed magnetic field excitation unit 2 is located in the outer peripheral direction of the variable magnetic field excitation unit 3.

Other configurations are the same as those of the magnetic refrigeration system 100 shown in Fig. 7A, and the description thereof will not be repeated. Fig. 9B is a cross-sectional view of the magnetic refrigeration system 104 taken along the line **IXB-**IXB.

### <Operation of magnetic refrigeration system>

When using the magnetic refrigeration system according to the present embodiment, it is possible to carry out a cooling method including an excitation step, a heat removal step, an adiabatic demagnetization step, and a cooling step. In the cooling method, the gas to be cooled at the first temperature can be used, and the high temperature end 4 can be set to the first temperature and the low temperature end 5 can be set to the second temperature. Hereinafter, the operation will be described by showing an example using the magnetic refrigeration system 100 shown in Fig. 7A. The magnetic refrigeration system 100 according to the present embodiment is not limited to conditions such as numerical values used in this examples.

The magnetic refrigeration operation unit 1 has a simple substance holmium as a working substance. Therefore, the simple substance holmium may be formed into particles or pellets, may be porous, or may be a dense solid. If the holmium is in the form of particles or pellets, the gas to be cooled can flow inside the magnetic refrigeration operation unit 1. In the case of the dense form, the gas to be cooled becomes flows through the refrigerant flow path 6. In the case of porous, when the fluid resistance is low, the gas to be cooled can flow inside the magnetic refrigeration operation unit 1, but when the fluid resistance is extremely high, the refrigerant flow path 6 is provided and the gas to be cooled flows therethrough. An overall shape of the magnetic refrigeration operation unit 1 is preferably cylindrical, but may be rod-shaped, flat plate-shaped, or tubular.

A reciprocating magnetic field excitation unit is a reciprocating magnetic field excitation unit that generates an operation magnetic field that operates including a steep slope area in the magnetization (M)-magnetic field (H) curve of the magnetic refrigeration material, and performs reciprocating excitation of the magnetic field to be applied between a low-level side connection area side of the steep slope area in the operation magnetic field or the low-level side magnetic field corresponding to the low-level side connection area and a high-level side connection area side of the steep slope area in the operation magnetic field or the high-level side magnetic field corresponding to the high-level side connection area (see Fig. 1A). The operation magnetic field preferably includes the entire steep slope area, but may include at least a part of the steep slope area. The reciprocating magnetic field excitation unit is configured of the fixed magnetic field excitation unit 2 and the variable magnetic field excitation unit 3.

The fixed magnetic field excitation unit 2 applies a magnetic field corresponding to the low-level side connection area of the steep slope area of the magnetic refrigeration material by a fixed magnetic field (H₀; H₀ > 0), and is thus made of, for example, a permanent magnet. The magnetic field strength of the fixed magnetic field is set to 0.2 T, 0.4 T, 0.6 T, 0.8 T, 1.0 T, and 1.2 T in the fixed magnetic field excitation units 2a, 2b, 2c, 2d, 2e, and 2f, for example.

The variable magnetic field excitation unit 3 applies a variable magnetic field corresponding to a variable magnetic field amplitude from the low-level side connection area to the high-level side connection area of the steep slope area of the magnetic refrigeration material by the variable magnetic field (h; h > 0) having a constant width, and is thus made of, for example, a normal conducting or superconducting magnet. The magnetic field strength of the variable magnetic field when the variable magnetic field excitation unit 3 acts is set to, for example, 0.4 T.

In this example, the variable magnetic field excitation unit 3 is provided in a tubular shape on the outer peripheral side of the magnetic refrigeration operation unit 1, and the fixed magnetic field excitation unit 2 is provided in a tubular shape on the outer peripheral side of the variable magnetic field excitation unit 3. The fixed magnetic field excitation unit 2 and the variable magnetic field excitation unit 3 may be disposed concentrically in the order shown in Fig. 7A, and may also be disposed in the reverse order.

Hereinafter, an example will be described in which the first end 4 acts as a high temperature end and the second end acts as a low temperature end 5. The high temperature end 4 is a high temperature end of the magnetic refrigeration operation unit 1, and is located on the high magnetic field side in a case where the magnetic field generated by the fixed magnetic field excitation unit 2 is provided with a high or low slope. The high temperature end 4 may have a structure in which heat is exchanged with the gas to be cooled by the flow of a refrigerant, or the gas to be cooled is used as a refrigerant gas.

The low temperature end 5 is a high temperature end of the magnetic refrigeration operation unit 1, and is located on the low magnetic field side in a case where the magnetic field generated by the fixed magnetic field excitation unit 2 is provided with a high or low slope. The low temperature end 5 may have a structure in which heat is exchanged with the gas to be cooled by the flow of a refrigerant, or the gas to be cooled is used as a refrigerant gas.

The refrigerant flow path 6 is provided along the longitudinal direction of the magnetic refrigeration operation unit 1, and the refrigerant can move between the high temperature end 4 and the low temperature end 5, and the refrigerant existing in the refrigerant flow path 6 is configured to exchange heat with the magnetic refrigeration material.

Next, the magnetic refrigeration module forming the magnetic refrigeration system will be described. In the magnetic refrigeration module, ring-shaped permanent magnets are concentrically arranged outside the simple substance holmium forming the magnetic refrigeration operation unit 1 as the fixed magnetic field excitation unit 2, and a ring-shaped resistive magnets that generate a variable magnetic field of 0.4 T are arranged outside the fixed magnetic field excitation unit 2, as the variable magnetic field excitation unit 3.

The magnetic refrigeration system shown in Fig. 7A is configured of six magnetic refrigeration modules. Adjacent magnetic refrigeration modules have magnetic field strength of the fixed magnetic field from 0.2 T to 1.2 T at intervals of 0.2 T.

As the variable magnetic field excitation unit 3, a resistive magnets that generate a variable magnetic field of 0.4 T are arranged outside the fixed magnetic field excitation unit 2. The resistive magnet may be provided independently for each magnetic refrigeration module, or may be provided in common with magnetic refrigeration modules.

In the simple substance holmium as a working substance in the magnetic refrigeration operation unit 1, a refrigerant flow path 6 through which hydrogen or helium gas to be cooled can pass and exchange heat is provided. In a case of hydrogen, since the hydrogen reacts with holmium, it is necessary to set a flow path structure that can indirectly exchange heat. The refrigerant flow path 6 may be provided independently for each magnetic refrigeration module, or may be provided in common with magnetic refrigeration modules. In a case where the refrigerant flow path 6 is provided independently for each magnetic refrigeration module, it is necessary to provide a connection pipe for connecting refrigerant flow paths 6 to each other.

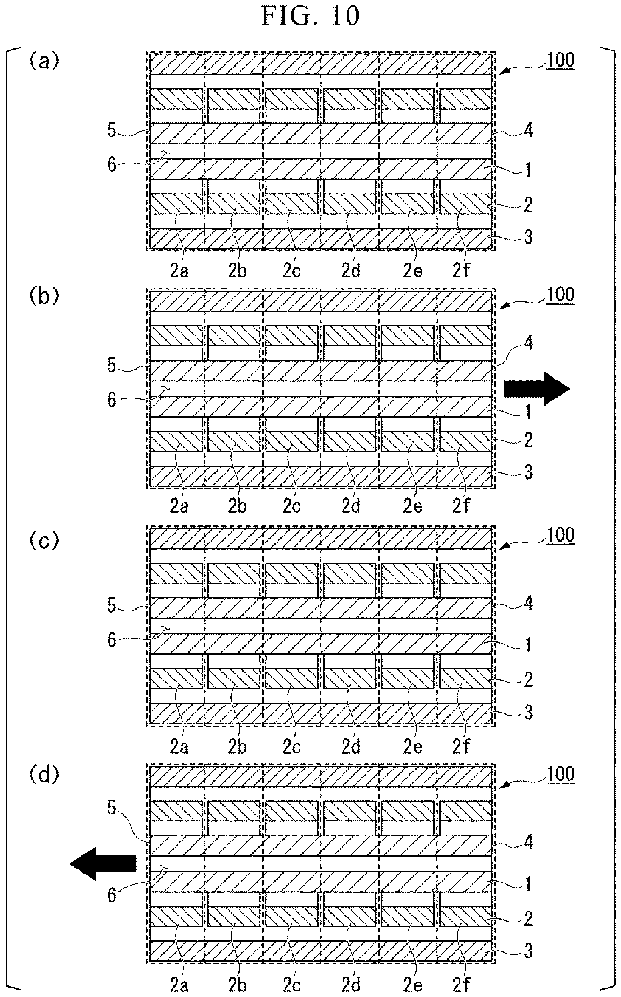

Fig. 10 is an explanatory view showing an example of operation steps of the magnetic refrigeration system, in which (a) shows an excitation step, (b) shows a heat removal step, (c) shows an adiabatic demagnetization step, and (d) shows a cooling step.

First, in the excitation step shown in Fig. 10(a), the variable magnetic field is increased by 0.4 T (in the ON state) to increase the temperature of the simple substance holmium as a working substance contained in the magnetic refrigeration operation unit 1.

Next, in the heat removal step of the working substance shown in Fig. 10(b), a gas to be cooled of about 50 K is passed from the low temperature end 5 to the high temperature end 4, and heat removal of the simple substance holmium forming the magnetic refrigeration operation unit 1 is performed.

Next, in the adiabatic demagnetization step shown in Fig. 10(c), the variable magnetic field is demagnetized to zero (in the OFF state) and the temperature of the simple substance holmium is lowered.

Further, as shown in Fig. 10(d), the gas to be cooled is passed from the high temperature end 4 to the low temperature end 5 to cool the gas to be cooled.

In the magnetic refrigeration system 100, by repeating the four steps shown in Fig. 10, for example, a magnetic refrigeration system having a temperature gradient of about 50 K at the high temperature end 4 and about 20 K at the low temperature end 5 (17 K for helium) was realized.

The variable magnetic field excitation unit 3 can also be a superconducting magnet, and the energy efficiency is improved by using an oxide superconducting wire and operating at a liquid nitrogen temperature (77 K).

In the device shown in Fig. 7A, a magnetic refrigeration system having a temperature gradient of 30 K, about 50 K at the high temperature end and about 20 K at the low¥ temperature end was realized by using a permanent magnet to generate a fixed magnetic field and using a normal conducting (or superconducting) magnet to generate a variable magnetic field.

### <Modification Example A>

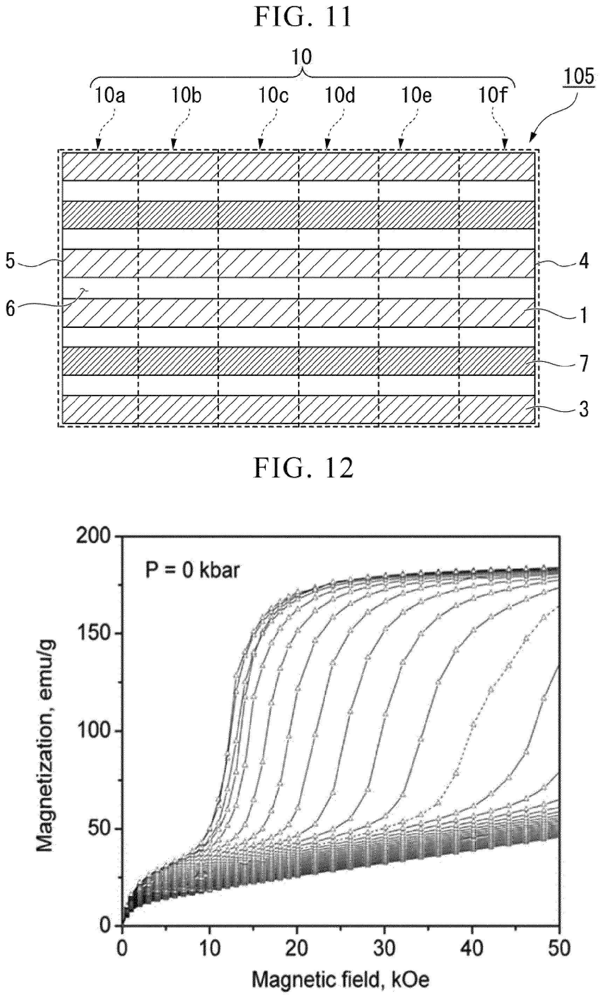

Fig. 11 is a schematic view showing a magnetic refrigeration system 105 according to Modification Example A based on Examples 1 and 2 of the present invention. The embodiment of the magnetic refrigeration system 105, as shown in Fig. 11 does not correspond to the claimed invention. The magnetic refrigeration system 105 is different from the magnetic refrigeration system 100 in that only one fixed magnetic field excitation unit 7 is provided. In the fixed magnetic field excitation unit 7, the magnetic field strength of the fixed magnetic field changes continuously or stepwise along the first direction. In a case where the magnetic field of the fixed magnetic field excitation unit 7 changes stepwise, the system is divided into magnetic refrigeration modules 10a to 10f as shown in Fig. 11. Since the magnetic field strengths at both ends of the fixed magnetic field are different from each other, the entire configuration shown in Fig. 11 is a magnetic refrigeration system. Even in a case where the magnetic field of the fixed magnetic field excitation unit 7 changes continuously, the magnetic field strength of the fixed magnetic field in the section in the longitudinal direction is a predetermined value, and the magnetic refrigeration system 105 includes at least one magnetic refrigeration module. Hereinafter, an example of a specific operation of the magnetic refrigeration system 105 will be described.

In the magnetic refrigeration system 105, superconducting magnets having a magnetic field with a slope of 0.2 to 2.5 T as the fixed magnetic field excitation unit 7 are arranged outside the simple substance holmium configuring the magnetic refrigeration operation unit 1. As the variable magnetic field excitation unit 3, a superconducting or resistive magnet that generates a variable magnetic field of 0.4 T is arranged outside the fixed magnetic field excitation unit 2. In the simple substance holmium, a refrigerant flow path 6 through which hydrogen or helium gas to be cooled can exchange heat (directly or indirectly).

In the magnetic refrigeration system shown in Fig. 11, steps corresponding to the four steps shown in Fig. 10 are repeated. For convenience of explanation, in Fig. 10, a direction in which the refrigerant flow flows is indicated by an arrow.

First, in a step corresponding to the excitation step shown in Fig. 10(a), the variable magnetic field is increased by 0.4 T to increase the temperature of the simple substance holmium as a working substance contained in the magnetic refrigeration operation unit 1.

Next, in a step corresponding to the heat removal step of the working substance shown in Fig. 10(b), hydrogen precooled to 77 K with liquid nitrogen from the low temperature end 5 to the high temperature end 4 or helium precooled to 120 K with liquefied natural gas is passed as a gas to be cooled to remove heat from the simple substance holmium configuring the magnetic refrigeration operation unit 1.

Next, in a step corresponding to the adiabatic demagnetization step shown in Fig. 10(c), the variable magnetic field is demagnetized to zero and the temperature of the simple substance holmium is lowered.

Further, in a step corresponding to the cooling step shown in Fig. 10(d), the gas to be cooled is passed from the high temperature end 4 to the low temperature end 5 to cool the gas to be cooled.

In the magnetic refrigeration system shown in Fig. 11, in a case where the hydrogen precooled to 77 K with liquid nitrogen is used by repeating the steps corresponding to the four steps shown in Fig. 10, a magnetic refrigeration system having a temperature gradient of about a temperature of 77 K at the high temperature end 4 and about a temperature of 20 K at the low temperature end 5 was realized. In a case where the helium precooled to 120 K with liquefied natural gas is used, a magnetic refrigeration system having a temperature gradient of a temperature of 120 K at the high temperature end 4 and about a temperature of 17 K at the low temperature end 5 was realized.

In the example, a magnetic refrigeration system having a temperature gradient of 57 K (100 K) of 77 K (or 120 K) at the high temperature end and 20 K (17 K in the case of helium) at the low temperature end was realized by using a gradient magnetic field superconducting magnet to generate a fixed magnetic field and using a normal conducting (or superconducting) magnet to generate a variable magnetic field.

### <Modification Example B>

Similar to the simple substance holmium, a phenomenon that the magnetization (M)-magnetic field (H) characteristics vary depending on the temperature and the magnetization (M) changes rapidly from a certain magnetic field (H) occurs on Gd₅(Ge₁₋ₓSiₓ)₄ (x = 0 to 1), Co (SₓSe₁₋ₓ)₂ (x = 0.8 to 1.0), (Sm₁₋ₓGdₓ)_{0.55}Sr_{0.45}MnO₃ (x = 0 to 1), Eu_{0.55}Sr_{0.45}MnO₃, rare earth simple substances Tb, Dy, and Er, or an alloy obtained by a combination thereof.

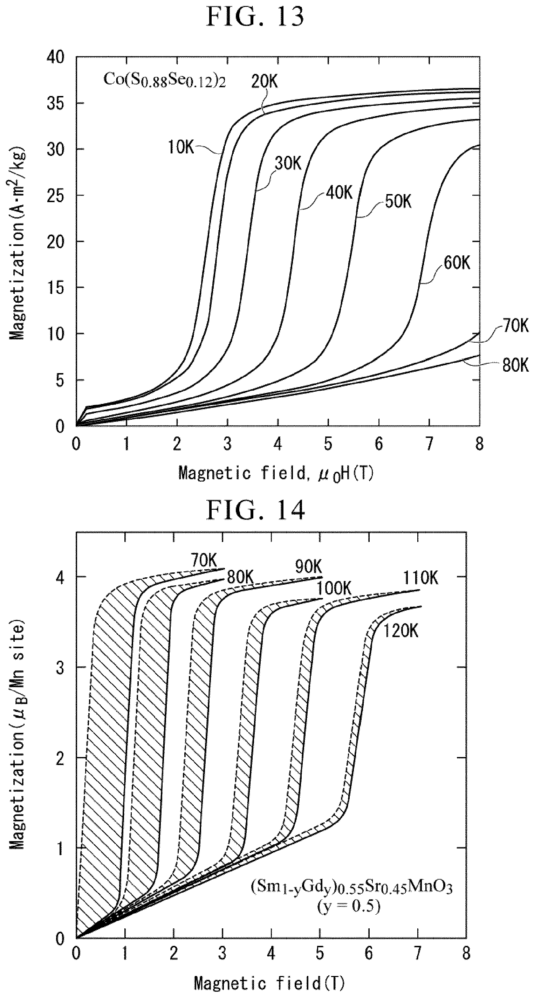

As an example, Fig. 12 shows the magnetization (M)-magnetic field (H) curve of Gd₅Ge₄ (from 16 K to 100 K in 3 K increments), Fig. 13 shows the magnetization (M)-magnetic field (H) curve of Co(SₓSe₁₋ₓ)₂, and Fig. 14 shows a magnetization (M)-magnetic field (H) curve of (Gd_{0.5}Sm_{0.5})₀₅₅Sr_{0.45}MnO₃. In Fig. 14, the solid line shows the change when the external magnetic field is applied, and the dotted line shows the change when the external magnetic field is decreased.

Fig. 13 is a diagram showing the magnetization (M)-magnetic field (H) characteristics of Co(SₓSe₁₋ₓ)₂ of Modification Example B. Although values of the fixed magnetic field and the variable magnetic field are different from those of the simple substance holmium, the same effect as that of the present invention can be obtained. (References: Hirofumi Wada and Yoshiro Maekawa, IEEE Trans. Magn. Vol. 50 (2014)).

Similar to the simple substance holmium, Gd₅Ge₄, Co (SₓSe₁₋ₓ)₂, and (Gd_{0.5}Sm_{0.5})_{0.55}Sr_{0.45}MnO₃ also have different M-H characteristics depending on the temperature, and the M-H characteristics change rapidly from a certain magnetic field. Therefore, the same magnetic refrigeration effect as that of the simple substance holmium can be expected.

However, since the magnetic field strength corresponding to the steep slope area varies for each magnetic refrigeration material, the optimum magnetic field for the fixed magnetic field varies depending on each substance. For example, in the case of Co(SₓSe₁₋ₓ)₂, the steep slope area is located in the area in which the magnetic field strength is 2 to 7 T, and the width thereof is approximately 1 T or less, although the magnetic field strength varies depending on the temperature. Therefore, a continuous gradient magnetic field superconducting magnet from 2 to 7 T is required as a fixed magnetic field, and a superconducting magnet having a variation width of 1 T is required as a variable magnetic field. The total magnetic field change of the fixed magnetic field and the variable magnetic field is 2 T to 8 T. Other configurations are the same as those of the magnetic refrigeration system 100. In Modification Example B, for example, a magnetic refrigeration system having a 60 K at the high temperature end and 20 K (10 K for helium) at a low temperature end can be realized.

### <Comparative Example>

Table 2 shows examples of typical magnetic refrigeration materials for low temperatures suitable for hydrogen liquefaction. Table 2 shows the change in entropy and the entropy change efficiency when only a predetermined variable magnetic field (magnetic field) is applied to the magnetic refrigeration material in a temperature T_{M} without applying a magnetic field as a fixed magnetic field. In Table 2, the numerical values after "@" in the column of Entropy change efficiency indicate the magnetic field strength given as the variable magnetic field. For example, in sample A, it is shown that when a variable magnetic field of 5 T is applied, a change by 14.9 (J·kg⁻¹·K⁻¹) occurs. The entropy change efficiency is the change in entropy when a variable magnetic field of 1 T is applied.

**[Table 2]**

| | Magnetic refrigeration material | Temperature T_{M} (K) | Change in entropy ΔS_{M} (J·kg⁻·-K⁻¹) | Entropy change efficiency |
|---|---|---|---|---|
| Sample A | Er₅Pd₂ | 20 | 14.9@5T | 2.98 |
| Sample B | Ho_{5.4}Pd₂ | 28.1 | 15.9@5T | 3.18 |
| Sample C | Ce_{0.5}Nd_{0.5}Si | 31 | 4.8@3T | 1.6 |
| Sample D | ErCo₂ | 35 | 33@5T | 6.6 |
| Sample E | Gd₅Ge₄ | 42 | 24.5@5T | 4.9 |
| Sample F | La_{0.65}Ce_{0.35}(Fe_{0.860}Mn_{0.025}Si_{0.115})₁₃ | 43 | 8@2T | 16 |
| Sample G | high-entropy glass | 45 | 8.53@5T | 1.71 |

The temperature, change in entropy, and entropy change efficiency of Sample A, Sample B, and Sample D are based on Japanese Unexamined Patent Application, First Publication No. 2017-39993. The temperature, the change in entropy, and entropy change efficiency of Sample C, Sample E, Sample F, and Sample G are based on PCT International Publication No. 2018/129476, J. J. Appl. PhysAppl. Phys. 105, 07A934 (2019) and Chinese Patent Application Publication No. 1017012408.

Since it is necessary to have a refrigerating capacity in a temperature range of about 40-50K, which reduces the efficiency of gas refrigerating, to a boiling point of liquid hydrogen of 20K, which is equal to or more than twice the temperature range, parallel use of a plurality of types of substances is also being considered.

Although the present invention has been described in detail above, the present invention is not limited to the above-described examples, and can be appropriately carried out within a range obvious to those skilled in the art without departing from the spirit of the present invention. For example, it is possible to omit, add, or change numbers, numerical values, quantities, ratios, characteristics, and the like without departing from the gist of the present invention. In addition, the configurations described in a plurality of embodiments and modification examples may be combined as appropriate.

Further, for example, in the above examples, the magnetic refrigeration operation unit, the fixed magnetic field excitation unit, and the variable magnetic field excitation unit are not provided with a mechanism for changing the mutual positional relationship. However, the magnetic refrigeration module and the magnetic refrigeration system using the same of the present invention may be provided with a substance that causes a magnetic refrigeration material substance to generate heat or absorb heat or a mechanism for reciprocating or rotating a variable magnetic field excitation unit.

In the above examples, the case where the entire shape of the magnetic refrigeration operation unit is cylindrical is shown, but the magnetic refrigeration operation unit may be rod-shaped or flat plate-shaped. In this case, the fixed magnetic field excitation unit and the variable magnetic field excitation unit may have a sandwich shape in which the magnetic refrigeration operation unit is sandwiched between the upper and lower parts.

The fixed magnetic field excitation unit includes an upper fixed magnetic field excitation unit and a lower fixed magnetic field excitation unit provided so as to sandwich the magnetic refrigeration operation unit in at least one of the thickness direction and the width direction of the magnetic refrigeration operation unit, and for example, a flat plate-shaped permanent magnet is used. The variable magnetic field excitation unit is a flat plate-shaped electromagnet that generates a variable magnetic field in addition to the fixed magnetic field generated by the upper fixed magnetic field excitation unit and the lower fixed magnetic field excitation unit, and may be, for example, a resistive magnet or a superconducting magnet.

### [Industrial Applicability]

According to the magnetic refrigeration module of the present invention, when changing the magnetic field only in the range where the M-H characteristics change significantly, a highly efficient magnetic refrigeration system can be constructed even when a substance having a single composition is used.

Further, according to the magnetic refrigeration system of the present invention, when adopting a magnetic field application structure in which a variable magnetic field is superimposed on the base magnetic field, it is possible to apply only the magnetic field range having the largest magnetic refrigeration effect, and the efficiency can be improved.

### [Reference Signs List]

1: Magnetic refrigeration operation unit
2: Fixed magnetic field excitation unit
3: Variable magnetic field excitation unit
4: First end (high temperature end)
5: Second end (low temperature end)
6: Refrigerant flow path
7: Fixed magnetic field excitation unit
10: Magnetic refrigeration module
100, 101, 102, 103, 104, 105: Magnetic refrigeration system

## Claims

1. A magnetic refrigeration module (10) comprising:
a magnetic refrigeration operation unit (1) which has a magnetic refrigeration material, and extends in a longitudinal direction; and
a fixed magnetic field excitation unit (2) and a variable magnetic field excitation unit (3) which are disposed apart from each other in an outer peripheral direction of the magnetic refrigeration operation unit (1),
wherein the fixed magnetic field excitation unit (2) applies a fixed magnetic field to the magnetic refrigeration operation unit (1), and
the variable magnetic field excitation unit (3) applies a variable magnetic field to the magnetic refrigeration operation unit (1) when being in an ON state and does not apply the variable magnetic field to the magnetic refrigeration operation (1) unit when being in an OFF state,
**characterized in that** the fixed magnetic field excitation unit (2) and the variable magnetic field excitation unit (3) are disposed concentrically,
the fixed magnetic field excitation unit (2) is disposed in an outer peripheral direction of the variable magnetic field excitation unit (3), and
the fixed magnetic field excitation unit (2) is in a tubular shape,
the fixed magnetic field is a magnetic field having a predetermined magnetic field strength, and the magnetic field strength does not vary with a passage of time, and at least one of a superconducting magnet and a resistive magnet is used as the variable magnetic field excitation unit (3).

2. The magnetic refrigeration module (10) according to Claim 1,
wherein the magnetic refrigeration operation unit (1) is rod-shaped, flat plate-shaped, cylindrical, or tubular.

3. The magnetic refrigeration module (10) according to claim 1 or 2,
wherein the magnetic refrigeration material is H₀ (holmium), Gd₅(Ge₁₋ₓSiₓ)₄ (x = 0 to 1), Co (SₓSe₁₋ₓ)₂ (x = 0.8 to 1.0), (Sm₁₋ₓGdₓ)_{0.55}Sr_{0.45}MnO₃ (x = 0 to 1), Eu_{0.55}Sr_{0.45}MnO₃, rare earth simple substances Tb (terbium), Dy (dysprosium), and Er (erbium), or an alloy obtained by a combination thereof.

4. The magnetic refrigeration module (10) according to any one of Claims 1 to 3,
wherein the fixed magnetic field excitation unit (2) is a permanent magnet configured for generating a magnetic field strength of the fixed magnetic field is 1.5 T or less, or the fixed magnetic field excitation unit (2) is a superconducting magnet and the magnetic refrigeration module (10) is configured for generating magnetic field strength of the fixed magnetic field which is 1.5 T or more.

5. A magnetic refrigeration system (104) comprising:
at least one magnetic refrigeration module (10) according to any one of Claims 1 to 4,
wherein a magnetic field strength to be applied to the magnetic refrigeration operation unit (1) by the fixed magnetic field excitation unit (2) is distributed so as to become higher continuously or stepwise in the longitudinal direction.

6. The magnetic refrigeration system (104) according to Claim 5, comprising a plurality of the magnetic refrigeration modules (10).

7. The magnetic refrigeration system (104) according to Claim 5 or 6,
wherein a magnetic field strength of a variable magnetic field to be applied to the magnetic refrigeration operation unit (1) by the variable magnetic field excitation unit (3) is distributed so as to become higher continuously or stepwise in the longitudinal direction.

8. The magnetic refrigeration system (104) according to Claim 5 or 6,
wherein a magnetic field strength of a variable magnetic field to be applied to the magnetic refrigeration operation unit (1) by the variable magnetic field application unit is constant in the longitudinal direction.

9. The magnetic refrigeration system (104) according to Claim 5, comprising only one magnetic refrigeration module (10), and the magnetic refrigeration module (10) is the magnetic refrigeration module (10) according to Claim 1,
wherein the magnetic field strength to be applied to the magnetic refrigeration operation unit (1) by the fixed magnetic field excitation unit (2) is distributed so as to become higher continuously in the longitudinal direction, and
a magnetic field strength of a variable magnetic field to be applied to the magnetic refrigeration operation unit (1) by the variable magnetic field excitation unit (3) is distributed so as to become higher continuously in the longitudinal direction.

10. The magnetic refrigeration system (104) according to any one of Claims 7 to 9,
wherein a sum of the magnetic field strength of the fixed magnetic field and the magnetic field strength of the variable magnetic field is equal to or more than a magnetic field strength corresponding to a steep slope area when being in the ON state, and is equal to or less than a magnetic field strength corresponding to the steep slope area when being in the OFF state, and
the steep slope area is an area in which magnetization changes with a steep slope in response to a change in the magnetic field applied to the magnetic refrigeration operation unit (1).

11. The magnetic refrigeration system (104) according to any one of Claims 7 to 10,
wherein a high temperature end is set to a first temperature, and a low temperature end is set to a second temperature,
when a magnetic field strength to be applied to the high temperature end is higher than a magnetic field strength corresponding to the steep slope area in the first temperature, when being in the ON state,
a magnetic field strength to be applied to the high temperature end is lower than a magnetic field strength corresponding to the steep slope area in the first temperature, when being in the OFF state,
a magnetic field strength to be applied to the low temperature end is higher than a magnetic field strength corresponding to the steep slope area in the second temperature, when being in the ON state, and
a magnetic field strength to be applied to the low temperature end is lower than a magnetic field strength corresponding to the steep slope area in the second temperature, when being in the OFF state.

12. The magnetic refrigeration system (104) according to any one of Claims 7 to 11,
wherein a temperature at the low temperature end is 10 K or higher and a temperature at the high temperature end is 150 K or lower.

13. A cooling method using the magnetic refrigeration module (10) according to any one of Claims 1 to 4 or the magnetic refrigeration system (104) according to any one of Claims 5 to 12, the method comprising:
an excitation step of increasing a variable magnetic field and increasing a temperature of the magnetic refrigeration operation unit (1);
a heat removal step of flowing a gas to be cooled from the low temperature end to the high temperature end in the ON state;
an adiabatic demagnetization step of demagnetizing the variable magnetic field and lowering the temperature of the magnetic refrigeration operation unit (1); and
a cooling step of flowing the gas to be cooled from the high temperature end to the low temperature end,
wherein a hydrogen gas is used inside the magnetic refrigeration operation unit (1) as the gas to be cooled.

## Patentansprüche

1. Magnetisches Kühlmodul (10), umfassend:
eine magnetische Kühlbetriebseinheit (1), die ein magnetisches Kühlmaterial aufweist und sich in einer Längsrichtung erstreckt; und
eine feste Magnetfelderregungseinheit (2) und eine variable Magnetfelderregungseinheit (3), die voneinander beabstandet in einer Außenumfangsrichtung der magnetischen Kühlbetriebseinheit (1) angeordnet sind,
wobei die feste Magnetfelderregungseinheit (2) ein festes Magnetfeld auf die magnetische Kühlbetriebseinheit (1) anwendet, und
die variable Magnetfelderregungseinheit (3) ein variables Magnetfeld auf die magnetische Kühlbetriebseinheit (1) anwendet, wenn sie sich in einem EIN-Zustand befindet, und das variable Magnetfeld nicht auf die magnetische Kühlbetriebseinheit (1) anwendet, wenn sie sich in einem AUSZustand befindet,
**dadurch gekennzeichnet, dass** die feste Magnetfelderregungseinheit (2) und die variable Magnetfelderregungseinheit (3) konzentrisch angeordnet sind,
die feste Magnetfelderregungseinheit (2) in einer Außenumfangsrichtung der variablen Magnetfelderregungseinheit (3) angeordnet ist, und
die feste Magnetfelderregungseinheit (2) eine rohrförmige Form aufweist,
das feste Magnetfeld ein Magnetfeld mit einer vorbestimmten Magnetfeldstärke ist, und die Magnetfeldstärke sich nicht mit der Zeit ändert, und wenigstens einer von einem superleitenden Magneten und einem ohmschen Magneten als die variable Magnetfelderregungseinheit (3) verwendet wird.

2. Magnetisches Kühlmodul (10) nach Anspruch 1,
wobei die magnetische Kühlbetriebseinheit (1) stabförmig, flachplattenförmig, zylindrisch oder rohrförmig ist.

3. Magnetisches Kühlmodul (10) nach Anspruch 1 oder 2,
wobei das magnetische Kühlmaterial H₀ (Holmium), Gd₅ (Ge₁₋ₓSiₓ)₄ (x = 0 bis 1), Co (SₓSe₁₋ₓ )₂ (x = 0,8 bis 1,0), (Sm₁₋ₓGdₓ)_{0,55}Sr_{0,45} MnO₃ (x = 0 bis 1) ist, Eu_{0,55}Sr_{0,45} MnO₃, einfache Stoffe der seltenen Erden Tb (Terbium), Dy (Dysprosium) und Er (Erbium), oder eine Legierung, die durch eine Kombination davon erhalten wird, sind.

4. Magnetisches Kühlmodul (10) nach einem der Ansprüche 1 bis 3,
wobei die feste Magnetfelderregungseinheit (2) ein Permanentmagnet ist, dazu ausgestaltet, eine Magnetfeldstärke des festen Magnetfelds von 1,5 T oder weniger zu erzeugen, oder die feste Magnetfelderregungseinheit (2) ein superleitender Magnet ist und das Magnetkühlmodul (10) dazu ausgestaltet ist, eine Magnetfeldstärke des festen Magnetfelds von 1,5 T oder mehr zu erzeugen.

5. Magnetisches Kühlsystem (104), umfassend:
wenigstens ein magnetisches Kühlmodul (10) nach einem der Ansprüche 1 bis 4,
wobei eine von der festen Magnetfelderregungseinheit (2) auf die magnetische Kühlbetriebseinheit (1) anzuwendende Magnetfeldstärke so verteilt ist, dass sie kontinuierlich oder schrittweise in der Längsrichtung höher wird.

6. Magnetisches Kühlsystem (104) nach Anspruch 5, umfassend eine Mehrzahl an magnetischen Kühlmodulen (10).

7. Magnetisches Kühlsystem (104) nach Anspruch 5 oder 6,
wobei eine Magnetfeldstärke eines variablen Magnetfelds, das von der variablen Magnetfelderregungseinheit (3) auf die magnetische Kühlbetriebseinheit (1) aufzubringen ist, so verteilt ist, dass sie in der Längsrichtung kontinuierlich oder schrittweise höher wird.

8. Magnetisches Kühlsystem (104) nach Anspruch 5 oder 6,
wobei eine Magnetfeldstärke eines variablen Magnetfelds, das von der variablen Magnetfeldanwendungseinheit auf die magnetische Kühlbetriebseinheit (1) aufzubringen ist, in der Längsrichtung konstant ist.

9. Magnetisches Kühlsystem (104) nach Anspruch 5, umfassend nur ein magnetisches Kühlmodul (10), und das magnetische Kühlmodul (10) ist das magnetische Kühlmodul (10) nach Anspruch 1,
wobei die von der festen Magnetfelderregungseinheit (2) auf die magnetische Kühlbetriebseinheit (1) aufzuwendende Magnetfeldstärke so verteilt ist, dass sie in Längsrichtung kontinuierlich höher wird, und
eine von der variablen Magnetfelderregungseinheit (3) auf die magnetische Kühlbetriebseinheit (1) aufzubringende Magnetfeldstärke eines variablen Magnetfeldes so verteilt wird, dass sie in Längsrichtung kontinuierlich höher wird.

10. Magnetisches Kühlsystem (104) nach einem der Ansprüche 7 bis 9,
wobei eine Summe der Magnetfeldstärke des festen Magnetfelds und der Magnetfeldstärke des variablen Magnetfelds größer/gleich einer Magnetfeldstärke ist, die einem steilen Neigungsbereich entspricht, wenn sie sich im EIN-Zustand befindet, und kleiner/gleich einer Magnetfeldstärke ist, die dem steilen Neigungsbereich entspricht, wenn sie sich im AUS-Zustand befindet, und
der steile Neigungsbereich ein Bereich ist, in dem sich die Magnetisierung in Reaktion auf eine Änderung des Magnetfelds, das auf die magnetische Kühlbetriebseinheit (1) angewendet wird, mit einer steilen Neigung ändert.

11. Magnetisches Kühlsystem (104) nach einem der Ansprüche 7 bis 10,
wobei ein Hochtemperaturende auf eine erste Temperatur und ein Niedrigtemperaturende auf eine zweite Temperatur eingestellt ist,
wenn eine Magnetfeldstärke, die auf das Hochtemperaturende angewendet werden soll, höher ist als eine Magnetfeldstärke, die dem steilen Neigungsbereich in der ersten Temperatur entspricht, wenn sie sich im EIN-Zustand befindet,
eine Magnetfeldstärke, die auf das Hochtemperaturende angewendet werden soll, niedriger ist als eine Magnetfeldstärke, die dem steilen Neigungsbereich in der ersten Temperatur entspricht, wenn sie sich im AUS-Zustand befindet,
eine Magnetfeldstärke, die auf das Niedrigtemperaturende angewendet werden soll, höher ist als eine Magnetfeldstärke, die dem steilen Neigungsbereich in der zweiten Temperatur entspricht, wenn sie sich im EIN-Zustand befindet, und
eine Magnetfeldstärke, die auf das Niedrigtemperaturende angewendet werden soll, niedriger ist als eine Magnetfeldstärke, die dem steilen Neigungsbereich in der zweiten Temperatur entspricht, wenn sie sich im AUS-Zustand befindet.

12. Magnetisches Kühlsystem (104) nach einem der Ansprüche 7 bis 11, wobei eine Temperatur am Niedertemperaturende 10 K oder höher und eine Temperatur am Hochtemperaturende 150 K oder niedriger ist.

13. Kühlverfahren unter Verwendung des magnetischen Kühlmoduls (10) nach einem der Ansprüche 1 bis 4 oder des magnetischen Kühlsystems (104) nach einem der Ansprüche 5 bis 12, wobei das Verfahren umfasst:
einen Erregungsschritt zum Vergrößern eines variablen Magnetfelds und Erhöhen einer Temperatur der magnetischen Kühlbetriebseinheit (1);
einen Wärmeabfuhrschritt des Strömens eines zu kühlenden Gases vom Niedrigtemperaturende zum Hochtemperaturende im EIN-Zustand;
einen Schritt der adiabatischen Entmagnetisierung des Entmagnetisierens des variablen Magnetfelds und des Absenkens der Temperatur der magnetischen Kühlbetriebseinheit (1); und
einen Kühlschritt des Strömens des zu kühlenden Gases vom Hochtemperaturende zum Niedrigtemperaturende,
wobei ein Wasserstoffgas innerhalb der magnetischen Kühlbetriebseinheit (1) als das zu kühlende Gas verwendet wird.

## Revendications

1. Module de réfrigération magnétique (10) comprenant :
une unité de fonctionnement de réfrigération magnétique (1) qui a un matériau de réfrigération magnétique, et qui s'étend dans une direction longitudinale ; et
une unité d'excitation de champ magnétique fixe (2) et une unité d'excitation de champ magnétique variable (3) qui sont disposées à l'écart l'une de l'autre dans une direction périphérique extérieure de l'unité de fonctionnement de réfrigération magnétique (1),
dans lequel l'unité d'excitation de champ magnétique fixe (2) applique un champ magnétique fixe à l'unité de fonctionnement de réfrigération magnétique (1), et
l'unité d'excitation de champ magnétique variable (3) applique un champ magnétique variable à l'unité de fonctionnement de réfrigération magnétique (1) quand elle est dans un état de marche et n'applique pas le champ magnétique variable à l'unité de fonctionnement de réfrigération magnétique (1) quand elle est dans un état d'arrêt,
**caractérisé en ce que** l'unité d'excitation de champ magnétique fixe (2) et l'unité d'excitation de champ magnétique variable (3) sont disposées de façon concentrique,
l'unité d'excitation de champ magnétique fixe (2) est placée dans une direction périphérique extérieure de l'unité d'excitation de champ magnétique variable (3), et
l'unité d'excitation de champ magnétique fixe (2) est de forme tubulaire,
le champ magnétique fixe est un champ magnétique ayant une intensité de champ magnétique prédéterminée, et l'intensité du champ magnétique ne varie pas dans le temps, et l'on utilise comme unité d'excitation de champ magnétique variable (3) au moins un élément parmi un aimant supraconducteur et un aimant résistif.

2. Module de réfrigération magnétique (10) selon la revendication 1, dans lequel l'unité de fonctionnement de réfrigération magnétique (1) est en forme de tige, en forme de plaque, cylindrique ou tubulaire.

3. Module de réfrigération magnétique (10) selon la revendication 1 ou 2, dans lequel le matériau de réfrigération magnétique est Ho (holmium), Gd₅(Ge₁₋ₓSiₓ)₄ (x = 0 à 1), Co(SₓSe₁₋ₓ)₂ (x = 0,8 à 1,0), (SM₁₋ₓGdₓ)_{0,55}Sr₀,₄₅MnO₃ (x = 0 à 1), Eu_{0,55}Sr_{0,45}MnO₃, les substances de terres rares simples Tb (terbium), Dy (dysprosium) et Er (erbium), ou un alliage obtenu par une combinaison de ceux-ci.

4. Module de réfrigération magnétique (10) selon l'une quelconque des revendications 1 à 3, dans lequel l'unité d'excitation de champ magnétique fixe (2) est un aimant permanent configuré pour produire une intensité de champ magnétique du champ magnétique fixe de 1,5 T ou moins, ou l'unité d'excitation de champ magnétique fixe (2) est un aimant supraconducteur et le module de réfrigération magnétique (10) est configuré pour produire une intensité de champ magnétique du champ magnétique fixe égale à 1,5 T ou plus.

5. Système de réfrigération magnétique (104) comprenant :
au moins un module de réfrigération magnétique (10) selon l'une quelconque des revendications 1 à 4,
dans lequel une intensité de champ magnétique à appliquer à l'unité de fonctionnement de réfrigération magnétique (1) par l'unité d'excitation de champ magnétique fixe (2) est répartie de façon à augmenter de manière continue ou par paliers dans la direction longitudinale.

6. Système de réfrigération magnétique (104) selon la revendication 5, comprenant une pluralité de modules de réfrigération magnétique (10).

7. Système de réfrigération magnétique (104) selon la revendication 5 ou 6, dans lequel une intensité de champ magnétique d'un champ magnétique variable à appliquer à l'unité de fonctionnement de réfrigération magnétique (1) par l'unité d'excitation de champ magnétique variable (3) est répartie de façon à augmenter de manière continue ou par paliers dans la direction longitudinale.

8. Système de réfrigération magnétique (104) selon la revendication 5 ou 6, dans lequel une intensité de champ magnétique d'un champ magnétique variable à appliquer à l'unité de fonctionnement de réfrigération magnétique (1) par l'unité d'application de champ magnétique variable est constante dans la direction longitudinale.

9. Système de réfrigération magnétique (104) selon la revendication 5, comprenant un seul module de réfrigération magnétique (10), et le module de réfrigération magnétique (10) est le module de réfrigération magnétique (10) selon la revendication 1,
dans lequel l'intensité de champ magnétique à appliquer à l'unité de fonctionnement de réfrigération magnétique (1) par l'unité d'excitation de champ magnétique fixe (2) est répartie de façon à augmenter de manière continue dans la direction longitudinale, et
une intensité de champ magnétique d'un champ magnétique variable à appliquer à l'unité de fonctionnement de réfrigération magnétique (1) par l'unité d'excitation de champ magnétique variable (3) est répartie de façon à augmenter de manière continue dans la direction longitudinale.

10. Système de réfrigération magnétique (104) selon l'une quelconque des revendications 7 à 9,
dans lequel une somme de l'intensité de champ magnétique du champ magnétique fixe et de l'intensité de champ magnétique du champ magnétique variable est supérieure ou égale à une intensité de champ magnétique correspondant à une région de forte pente dans l'état de marche, et est inférieure ou égale à une intensité de champ magnétique correspondant à la région de forte pente dans l'état d'arrêt, et
la région de forte pente est une région dans laquelle la magnétisation varie avec une forte pente en réponse à une variation du champ magnétique appliqué à l'unité de fonctionnement de réfrigération magnétique (1).

11. Système de réfrigération magnétique (104) selon l'une quelconque des revendications 7 à 10,
dans lequel une extrémité de température haute est réglée sur une première température, et une extrémité de température basse est réglée sur une deuxième température,
dans lequel une intensité de champ magnétique à appliquer à l'extrémité de température haute est supérieure à une intensité de champ magnétique correspondant à la région de forte pente à la première température, dans l'état de marche,
une intensité de champ magnétique à appliquer à l'extrémité de température haute est inférieure à une intensité de champ magnétique correspondant à la région de forte pente à la première température, dans l'état d'arrêt,
une intensité de champ magnétique à appliquer à l'extrémité de température basse est supérieure à une intensité de champ magnétique correspondant à la région de forte pente à la deuxième température, dans l'état de marche, et
une intensité de champ magnétique à appliquer à l'extrémité de température basse est inférieure à une intensité de champ magnétique correspondant à la région de forte pente à la deuxième température, dans l'état d'arrêt.

12. Système de réfrigération magnétique (104) selon l'une quelconque des revendications 7 à 11, dans lequel une température à l'extrémité de température basse est supérieure ou égale à 10 K et une température à l'extrémité de température haute est inférieure ou égale à 150 K.

13. Procédé de refroidissement utilisant le module de réfrigération magnétique (10) selon l'une quelconque des revendications 1 à 4 ou le système de réfrigération magnétique (104) selon l'une quelconque des revendications 5 à 12, le procédé comprenant :
une étape d'excitation consistant à augmenter un champ magnétique variable et à augmenter une température de l'unité de fonctionnement de réfrigération magnétique (1) ;
une étape de suppression de chaleur consistant à faire circuler un gaz devant être refroidi de l'extrémité de température basse à l'extrémité de température haute dans l'état de marche ;
une étape de démagnétisation adiabatique consistant à démagnétiser le champ magnétique variable et à abaisser la température de l'unité de fonctionnement de réfrigération magnétique (1) ; et
une étape de refroidissement consistant à faire circuler le gaz à refroidir de l'extrémité de température haute à l'extrémité de température basse,
dans lequel on utilise comme gaz à refroidir de l'hydrogène gazeux à l'intérieur de l'unité de fonctionnement de réfrigération magnétique (1).
